Europäisches Patentamt

(19) European Patent Office

Office européen des brevets

(11) Publication number: **0 221 204**
**B1**

## EUROPEAN PATENT SPECIFICATION

(45) Date of publication of the patent specification:
09.05.90

(51) Int. Cl.⁵: **B64C 30/00**

(21) Application number: **85201827.4**

(22) Date of filing: **08.11.85**

(54) Supersonic airplane.

(43) Date of publication of application:
**13.05.87 Bulletin 87/20**

(45) Publication of the grant of the patent:
**09.05.90 Bulletin 90/19**

(84) Designated Contracting States:
**DE FR GB IT NL**

(56) References cited:
**US-A- 3 310 262
US-A- 4 093 156**

**OFFICIAL GAZETTE, 31st May 1983, page 1676, "US Design Patent no. 269.176 (THE BOEING) ASTRONAUTICS & AERONAUTICS, June 1982, pages 22-31; D.P. RAYMER: "CDS grows new muscles" JOURNAL OF AIRCRAFT, vol. 13, no. 11, November 1976, pages 880-888; I.F. SAKATA et al.: "Design study of structural concepts for an arrow-wing supersonic cruise aircraft" AEROSPACE AMERICA, vol. 22, no. 1, January 1984, pages 95-99, New York, US; J.E. LAMAR et al.: "A candidate technology for the next generation of tactical fighters nears readiness for flight demonstration"**

(73) Proprietor: **The Boeing Company, P.O. Box 3707, Seattle Washington 98124(US)**

(72) Inventor: **Friebel, Gottfried Otto, 2813 - 170th S.E., Bellevue Washington 98008(US)**

(74) Representative: **Hoijtink, Reinoud et al, OCTROOIBUREAU ARNOLD & SIEDSMA Sweelinckplein 1, NL-2517 GK Den Haag(NL)**

ACTORUM AG

## Description

The present invention relates to a supersonic airplane according to the pre-characterizing part of claim 1.

Such an airplane is known from US design patent 269 176. Such an airplane is intended for flight at high-speed, more particularly at supersonic cruise speed of approximately Mach 2.5. This airplane can also be efficiently flown at high subsonic speed and has good slow subsonic speed flight characteristics for landing and takeoff operations. Contrary to a delta-shaped planform an arrow-shaped planform relates to a planform having an angle of sweepback of the leading edge of more than approximately 65 degrees.

It is an object of the present invention to improve upon the above known airplane, such that control of the airplane is improved.

Supersonic airplane characterized according to claim 1 has a wing tip-like airfoil section, outboard of the vertical stabilizers, which functions as a horizontal stabilizer when moved in concert or collectively and functions as ailerons when moved differentially.

Where the arrow-shaped wing and the elongated fuselage join, there is a change in fuselage cross section, i.e., the airplane is area-ruled so that the juncture of the two cross sectional areas (fuselage and wing) do not form an abrupt or sudden area accumulation, but rather a symmetrical blending. Therefore, this wing-to-fuselage juncture or mid-fuselage section is definitely contoured, i.e., it has what is termed a "waisted-in" body design which is due to the area ruling of the fuselage and wing cross-sectional areas.

The arrow-shaped wing planform combines the qualities of: a minimum aerodynamic wave drage which is produced by both the acute angle of sweepback of the wing leading edge and the low aspect ratio of the arrow-shaped planform; and, a minimum of aerodynamic profile drag resulting from both the area-rule streamlining of the fuselage which extends approximately equally for and aft of the wing, and an unusual egg-shaped cross-sectional design of the fuselage forebody section that provides adequate passenger seating comfort with a minimum of cross-sectional area.

A supersonic airplane design having an arrow-shaped wing platform is integrated with an elongated, streamlined fuselage of a specific geometric cross-sectional design; the best aerodynamic efficiency, i.e., the highest lift/drag ratio, is produced during cruise flight at a Mach numer of approximately 2.5.

The supersonic airliner has a long, slender fuselage of adequate internal volume for passengers, crew, fuel, and equipement; wherein, the cabin interior is planned around six passengers in a staggered two-abreast seating arrangement and two pilots in a tandem seating arrangement; and while providing adequate space for passengers and pilots with a minimum frontal area for low aerodynamic drag.

An advantage of sizing the airplane to six passengers and two pilots is that it significantly contributes to the flexibility of configuring the airplane to a military fighter, an interceptor, a reconnaissance aircraft, etc.

Plants possibly have a preferred externally contoured nacelle, relative to an arrow-shaped wing such that the combination produces an efficient nacelle/wing interference installation; whereby, aerodynamic drag is reduced and a forward thrust component is produced by a nacelle/wing expansion shock wave phenomenon.

These and other objects, advantages and features of the invention will become apparent from the following description taken in view of the accompanying drawings.

## BRIEF DESCRIPTION OF THE DRAWINGS

FIG. 1 is a general perspective view of an embodiment of an improved supersonic airplane designed in accordance with the invention.

FIG. 2 is a front elevational view of the same airplane with the landing gear extended.

FIG. 3 is a front elevational view of the same airplane with the landing gear retracted.

FIG. 4 is a rear elevational view of the same airplane.

FIG. 5 is a side elevational view of the same airplane.

FIG. 6 shows a series of body cross sections taken at corresponding stations indicated along the fuselage; further, a method for designing the fuselage forebody sections is also illustrated.

FIG. 7 is an enlarged detail of one of the body cross sections depicted in FIG. 6.

FIG. 8 is a top plan view of the same airplane.

FIG. 9 is an enlarged detail of the left wing tip section depicted in FIG. 8.

FIG. 10 is a graph of the airplane's cross-sectional area versus the body station, longitudinally, and also illustrates the blending of the fuselage, wing, etc., comprising the supersonic airplane, in conformance with an area-rule concept.

FIG. 11 is a graph of the wing thickness to chord in a percentage versus wing semi-span.

FIG. 12 is a graph of the amount of wing twist in degrees about the fifty percent chord versus the percent of wing semi-span.

## DESCRIPTION OF THE PREFERRED EMBODIMENTS

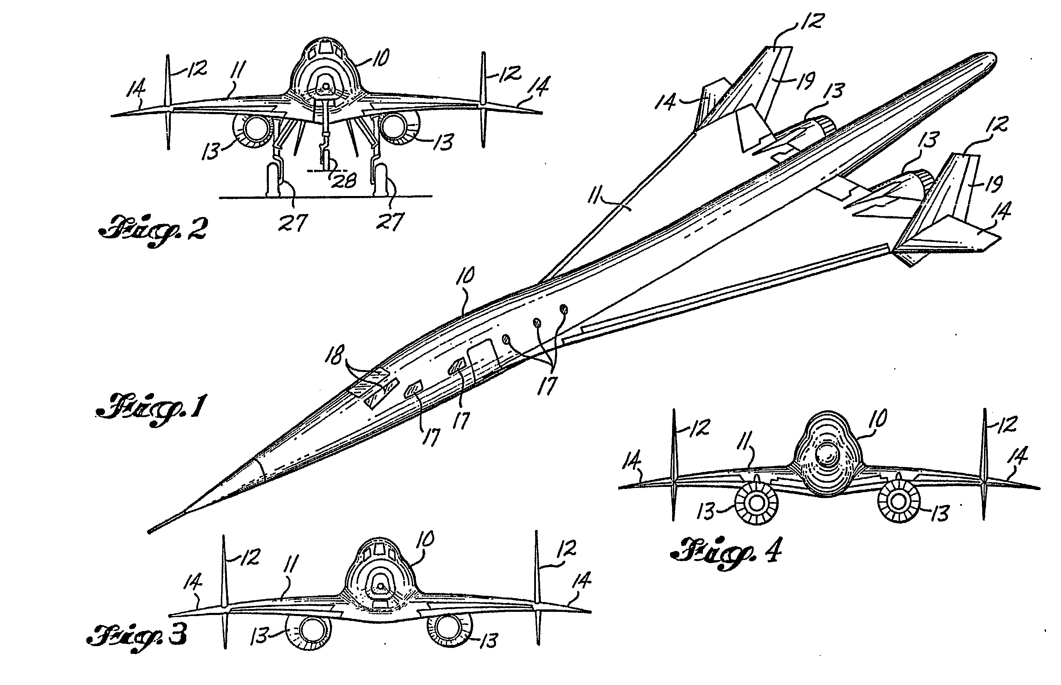

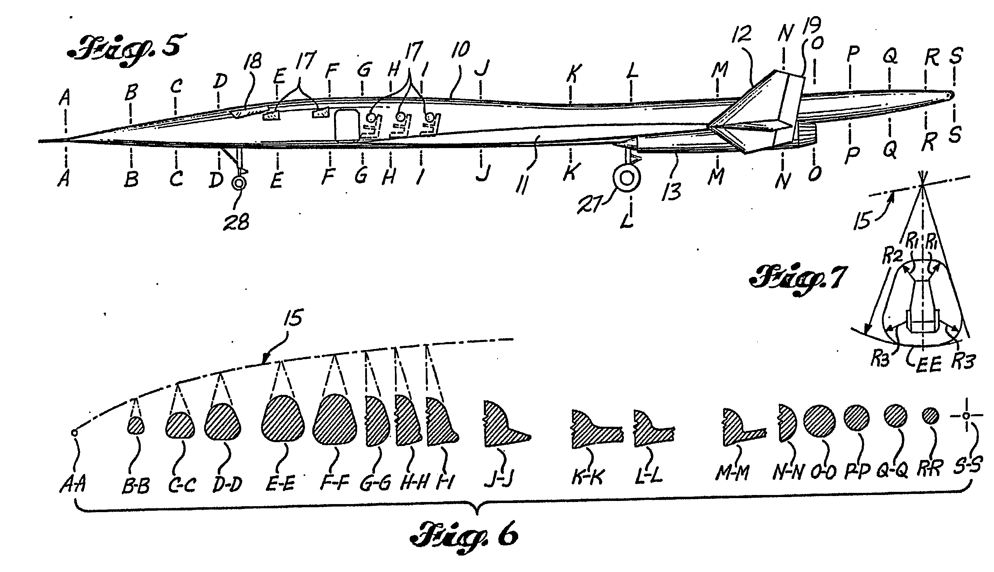

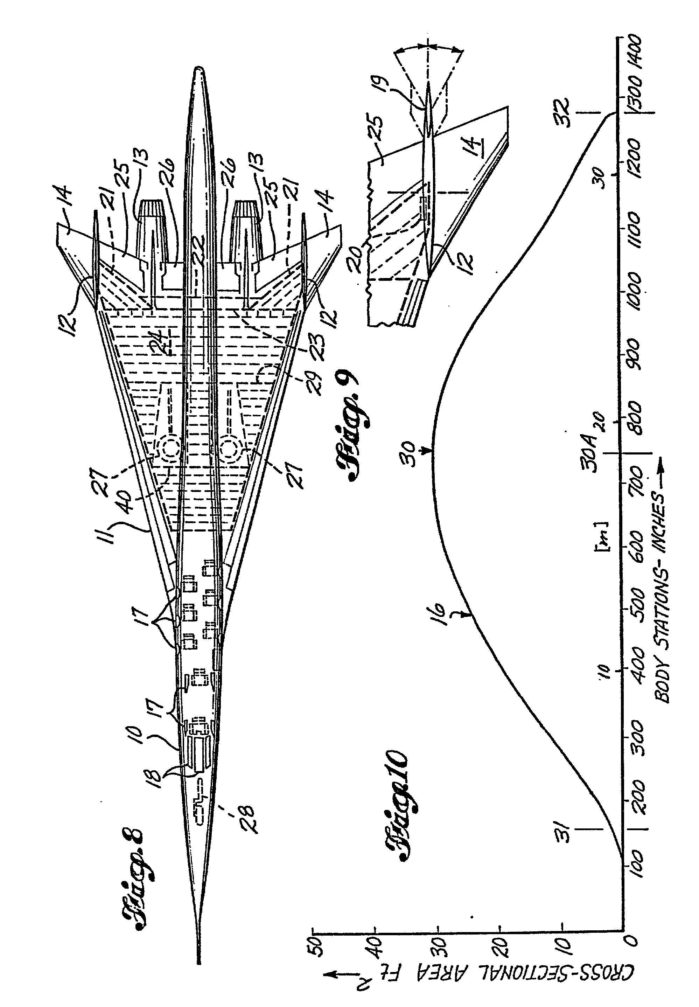

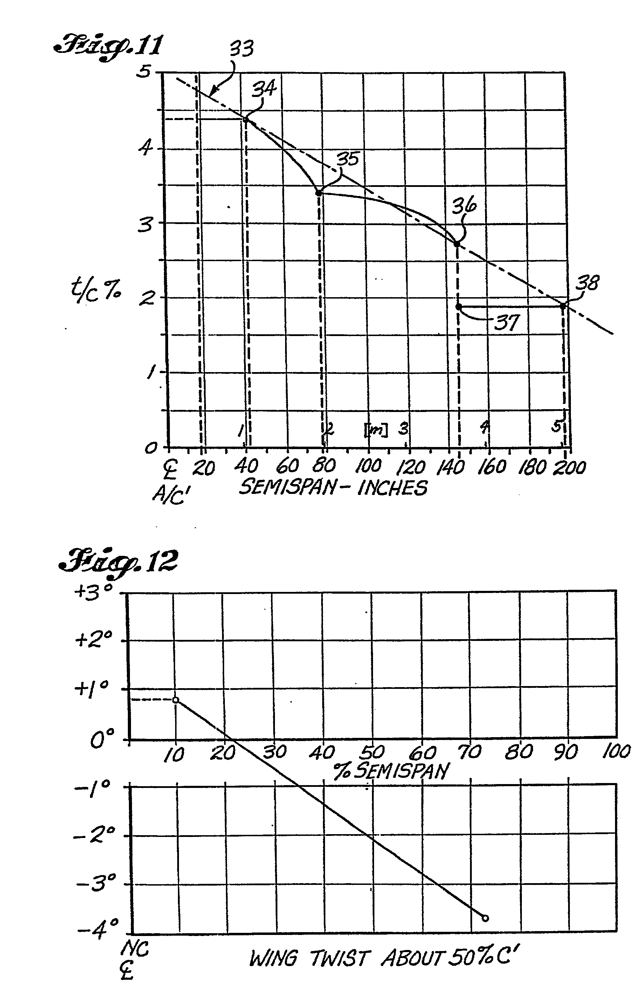

Referring to the drawings, FIGS. 1 - 5, 8, there is shown a twin-engine, supersonic airplane having an elongated fuselage 10; an arrow-shaped wing 11; a pair of transversely spaced apart vertical fins 12 mounted outboard on the wing 11; and a pair of pylon-mounted engine nacelles 13, each housing a turbojet engine, the engine nacelles 13 being spaced transversely apart on either side of the fuselage 10 and mounted from the undersurface of the wing 11.

With respect to the arrow-shaped wing planform, as shown in FIG. 8, a major length of the wing leading edge, from the fuselage 10 outboard to the vertical fins 12, has approximately a 75° angle of sweepback; and outboard of the vertical fins 12 are movable wing tip-like control surfaces 14 which have approximately a 60° angle of sweepback.

With respect to the trailing edge of the arrow-shaped wing planform: between the engine nacelles 13 and the fuselage 10, the wing trailing edge is at an angle normal to the fuselage centerline; and from the engine nacelles 13 outboard to, and including, the wing tip control surfaces 14, the angle of sweepback is approximately 25°.

The fuselage 10 comprises: a forebody section generally forward of the wing; a center-body section structurally integrated with the wing and with no fuselage protrusion evident from the undersurface of the wing; and an aft-body section that extends a substantial distance aft of the wing trailing edge, to a length approximately equal to that of the forebody section.

FIG. 6 shows a series of fuselage cross sections taken along the fuselage at the stations indicated, AA through SS in FIG. 5. FIG. 6 further depicts a method for geometrically designing the forebody section of the airplane fuselage wherein a curved loft line or common apex line 15 is utilized and from which downward projections are made for contouring the cross section of the fuselage.

The forebody cross sections, BB through II, appear egg-shaped and this provides a maximum cross-sectional area for passenger seating comfort with a minimum total cross-sectional fuselage area, because a seated passenger is generally wider across the buttocks and narrower across the head and shoulder region. Therefore, the fuselage cross section is contoured to this egg shape, as opposed to a circular shape, in order to produce the maximum comfort for the passengers with the minimum total cross-sectional area. Further, from an aerodynamic viewpoint, this egg-shaped cross section design produces surface configuration lines that present a minimal frontal area to freestream airflow and, thereby, provides a significant drag reduction, in comparison to present known supersonic transports.

With respect to the geometric design of the forebody section: initially, the total cross-sectional area at each of the depicted body stations is derived from the area-ruled graph shown in FIG. 10; and the area for the seated passengers determine one of the cross-sectional area minimums that are required to be enclosed by the area-rule envelope, shown in FIG. 10, which will be more fully described supra.

The overall shape of the fuselage forebody is derived from the following: the streamwise airflow pattern at the design supersonic cruise flight speed of Mach 2.5; the displacement volume of aircraft structure, components, and payload; and the smooth curvilinear plot line or the cross-sectional area-rule plot line 16 shown in FIG. 10.

In general, the geometric elements for design of the egg-shaped cross section of the forebody, referring to FIG. 7 which depicts the cross section at station EE enlarged, comprises four radii and a pair of flats for the sides, i.e.: a first pair of equal radii R1 form the top or upper surface curvature; a second radius R2, having its center on the common apex line 15, forms the bottom or undersurface curvature; a third pair of equal radii R3 form the bottom-side surface curvature; and a pair of downward projecting lines on an equal and opposite slope from the common apex line 15 form the flat sides of the fuselage.

An important aspect of the invention is that the downward projecting lines of equal and opposite slope from the vertical, form the flat contoured sidewalls which are undistorted from the standpoint of curvature in a vertical sense. However, in a horizontal sense or longitudinal direction, the sidewalls have a very slight curvature. Therefore, the fuselage sidewalls are only of a single curvature and this produces minimum aerodynamic drag characteristics, because the freestream airflow at a supersonic cruise speed of Mach 2.5 is accelerated in only one direction, i.e., in an inboard/outboard direction and not also in an upward/downward direction which would result from a double curvature of the generally known type fuselage.

The side windows 17 of the fuselage 10 are located within the flat sidewall area in order that there is a minimum of visual distortion due to thermal expansion in supersonic flight.

During supersonic flight, and especially around Mach 2.5, there is an enormous pressure acting on the front cockpit windows 18, and the side cockpit and passenger windows 17; and in addition, there are very high temperatures created due to frictional forces. Therefore, conventional curved windows should not be used due to high stress and thermal expansion which would produce visual distortion in the curved-type windows. When a curved window contracts or expands, it changes curvature and produces visual distortion; whereas, a flat window can contract or expand into the molding without producing visual distortion. Further, the front cockpit windows 18 of the present Mach 2.5 airplane are approximately four inches thick, and if they were curved and distorted due to thermal expansion and pressure, it would be like looking through a varying lens.

The mid-section of the fuselage or the section along the body/wing juncture is more of a circular-shaped cross-section, as shown in FIG. 6, sections JJ - LL; however, the circular aspect of the fuselage's lower portion is not evident due to its integration into the wing area.

In the aft-body section or the section aft of the body/wing juncture, beyond the trailing edge of the wing, the cross section is a clearly defined circular shape, as shown in FIG. 6, sections NN - RR. Further, it should be noted that there is a substantial extension of the fuselage aft of the wing trailing edge. Referring to FIG. 10, the total cross-sectional area of the aft-body section is determined from the area-rule graph and as shown by the slope of the area-rule line 16, the aft-body section not only provides the remaining enclosed area depicted on the graph, but it also produces a beneficial aerodynamic effect with respect to decreasing boat-tail drag.

With respect to airplane control surfaces, dual vertical stabilizers 12 are located outboard on the wing 11 and are of delta-shape in side planform having a rudder surface 19 which operates both above and below the wing chord plane. An advantage of positioning the vertical stabilizers 12 substantially outboard of the fuselage centerline is that, as the angle of attack of the wing 11 is increased, the vortices which are shed from the forebody section will no longer normally join with those from the wing 11, but they will continue substantially straight back; and if a fuselage centerline-mounted vertical stabilizer were used, these forebody-shed vortices could impinge thereon and cause directional control problems.

Control movement of the rudders 19, as shown in FIG. 9, is produced by actuators 20. The reaction control loads from the actuators 20 are taken up by the auxiliary wing structural box spar 21 cantilever supported from the rear spar 23 of the wing box 24, as opposed to the generally known mounting method wherein the stationary portion of the vertical stabilizer 12 is used for absorbing the reaction forces. By taking the reaction loads through structural wing spars, as opposed to the fixed vertical stabilizer 12, there is a minimum of aerodynamic disturbance effected by control movement of the rudders 19, i.e., if the fixed vertical stabilizer 12 is utilized for the reaction control forces, it would tend to twist and distort or the surface of the vertical fin would deflect, causing aerodynamic induced control disturbances.

The dual vertical stabilizers 12 also function as end plates, thereby creating the aerodynamic effect of two wings. This permits the auxiliary wing or wing tip control surface 14 outboard of the vertical stabilizers 12 to be actuated through various angles of incidence without substantially affecting the aerodynamic lift characteristics of the main wing section inboard thereof. Further, the wing tip control surfaces 14 are made to function both as a horizontal stabilizer and/or aileron and are termed "elevons".

The wing tip control surfaces 14, during subsonic flight, provide both roll control and pitch control; however, in supersonic flight they are locked out in order to increase the lift-to-drag ratio. The airplane is then controlled by wing trailing edge control surfaces 25 which are located between the vertical fins 12 and the engine nacelles 13, and these control surfaces 25 provide both roll control and pitch control i.e., they function as "elevons" to provide maneuverability at high speed. There are two additional wing trailing edge control surfaces 26, which are located outboard of the fuselage 10 and inboard of the engine nacelles 13, and these control surfaces 26 function as wing flaps.

In slow subsonic flight, such as during takeoff or landing operations, where the use of the wing trailing edge flaps 26 are required, the wing trailing edge control surfaces 25 are also deployed as flaps, and in order to trim out the aerodynamic down load from these deployed flaps 25, 26, the wing tip control surfaces 14 are utilized.

With respect to the engine nacelles 13, their external shape, in a fore-to-aft direction, is a conically divergent front section which is mated to a conically convergent rear section, and the rear section terminates in a variable exhaust nozzle for a turbojet engine. The positioning of the engine nacelles 13 relative to the wing 11 is such that, at supersonic cruise flight speeds of approximately Mach 2.5, a shock wave from the engine nacelles acts on the receding undersurface portion of the wing airfoil to produce a forward thrust component. In general, the positioning of the conically divergent front section of the engine nacelles 13 below the wing undersurface creates a pressure rise around them, and this results in a slight increase in wing lift for no increase in drag. Further, an expansion shock wave emanates from the wing leading edge and impinges on the conically convergent rear section of the engine nacelles to also produce a forward thrust component. This wing-to-nacelle arrangement, coupled with the specific nacelle contouring, produces a very favorable interference installation from an aerodynamic drag standpoint.

Further, locating the engine nacelles 13 a certain distance outboard of the fuselage 10, rather than adjacent thereto or on the centerline thereof, avoids a deep boundary layer region that builds up along the surface of the fuselage.

Also, it is beneficial for wing bending moments to have the engine weight a certain distance outboard from the longitudinal centerline of the fuselage; and a slight increase in rolling inertia is beneficial for lateral stability.

With respect to the landing gear, as shown in FIGS. 2, 5, and 8, both the main landing gear 27 and the nose landing gear 28 retract forwardly. The main landing gear 27 is mounted from the front spar 29 of the wing box 24 which is considered as the main structural area of the wing 11; the the main landing gear 27 retracts forwardly away from the structural wing box 24 into an area of the wing 11 where the structural loads are minimum, or essentially a non-structural area of the wing 11. A major portion of the wing bending loads are taken up by the wing box 24; however, due to the extensive wing chord length adjacent to the fuselage 10 and the multi-spar construction of the wing 11, the airloads are more evenly distributed throughout the length of the fuselage, i.e., there is a mutual distribution of the wing/body bending loads over a fairly large area, as evidenced by the wing root chord length adjacent to the fuselage 10. For stowing the main landing gear 27 very little reinforcement is required; because, where the spanwise wing structure is interrupted for accommodating the main landing gear 27 cut-out volume, both the airloads and the bending moments are relatively small in comparison to those imposed on the wing box 24. The multi-spar wing comprises straight taper spars; and the straight-through wing box structure bears the major portion of the aerodynamic loads, including the nacelle-mounted power plant and main undercarriage landing loads. Further, the long root chord wing mounted low on the long slender fuselage 10, i.e., the fuselage/wing structural juncture, substantially contributes to the longitudinal stiffness characteristics of the airplane.

In FIG. 10, which is a graph of the area-ruled airplane, the overall length of the airplane is indicated on the base line of the graph or along the x-axis, and the cross-sectional area of the airplane is indicated by the height of the curvilinear line 16 above the base line as measured along the vertical or y-axis. The maximum height point 30 of the curvilinear area line 16 is not quite in the center of the overall base line length approximately indicated at 30A between fore-and-aft equal cross section area stations 31 and 32 respectively, but is slightly aft thereof. Further, the change in slope of the curvilinear line 16 from the maximum height point 30 is at a greater rate in a rearward direction than in a forward direction. The supersonic wave drag of the airplane would be less if the change in slope of the curvilinear line from a maximum height point would be at a lesser rate in a rearward direction; however, this lesser slope would create a greater airplane volume aft of the maximum height point resulting in an increase in the wetted area and an increase in the amount of skin friction drag.

The area under the curvilinear line 16, on either side of the maximum height point 30, is generally designed to be symmetrical; however, through wind tunnel tests, it has been found that in order to balance the skin friction drag with the supersonic wave drag, the resulting overall contour of the line 16 should be as depicted in FIG. 10, wherein the base line distance from the maximum height point 30 is shorter in the aft direction (30A to 32) relative to the forward direction (30A to 31) or, stated in a more accurate manner, the volume encompassed by the curvilinear line 16 is less aft of the maximum height point 30 than it is forward thereof.

If the volume under the curvilinear line 16, aft of the maximum height point 30, were greater and the base line distance, between stations 30A and 32, were longer than as depicted in FIG. 10, there would be an increase in skin friction drag, but there would be a decrease in supersonic wave drag. Whereas, if the volume under the curvilinear line 16, aft of the maximum height point 30, were less and the base line distance were shorter than as depicted in FIG. 10, there would be a decrease in skin friction drag, but there would be an increase in supersonic wave drag due to the increased slope of line 16. Therefore, as depicted in FIG. 10, the two drag forces are balanced out.

FIGS. 2 to 4 are front and rear elevational views of the airplane and show the wing chord plane as having a downward curvature or anhedral. For a high-speed airplane, especially one that is designed for a cruise flight speed of Mach 2.5, an anhedral wing functions to stabilize the airplane, whereas a dihedral wing would tend to destabilize the airplane at supersonic speeds.

FIG. 11 is a graph of airfoil thickness-to-chord ratio distribution over the semi-span of the wing 11. The t/c % (thickness/chord ratio in percent) change from adjacent the fuselage 10 or wing root to the centerline of the engine nacelle 13 is at a fairly rapid rate as indicated by the relatively steep slope of line segment from points 34 to 35; and from the engine nacelle 13 to the vertical stabilizer 12, the slope of line segment from points 35 to 36 is of a lesser slope. The apparent kink at point 35 or the maximum deviation from the constant slope dash-dot-dot line 33 generally produces a wing crease line; however, due to the location of the engine nacelle 13 at point 35, the wing crease line is not evident and the upper surface of the wing 11 appears as one smooth and continuous contoured surface.

The wing 11 structurally comprises: a straight tapered forward spar 40; and two straight tapered main spars 29, 23, which form a structural wing box 24. The straight tapered spars in combination with the change in wing planform shape as shown in FIG. 8 result in producing the wing thickness/chord variations spanwise as shown in FIG. 11.

The wing 11 aerodynamically comprises one given family of airfoil sections with thickness/chord ratio changes spanwise, from a maximum of 4.4% adjacent the fuselage 10 to 2.75% at the vertical stabilizers 12, and approximately 1.8% constant thickness for the movable wing tip control surface 14.

FIG. 12 is a graph illustrating the amount of wing twist in degrees about the fifty-percent chord point at various spanwise stations indicated in percent of semi-span. The airfoil section adjacent to the side of the fuselage is at approximately 3/4° positive angle of incidence and at 75% semi-span, adjacent to the vertical fin, the airfoil section is at approximately 3-3/4° negative angle of incidence. When the present airplane is at supersonic cruise flight speed of approximately Mach 2.5 and at a cruise altitude of 12 200 m (40,000 feet), the longitudinal axis of the fuselage is at approximately 3.5° positive angle of attack. Therefore, with the wing twist distribution spanwise, as shown in FIG. 12, the wing airfoil sections spanwise will function aerodynically at approximately the same lift coefficient. An untwisted wing of similar planform, using substantially the same designated airfoil section throughout the wing span, will produce different lift coefficients spanwise, because, as the chord length of the airfoil section decreases from wing root to tip and the wing leading edge spanwise airflow and Reynolds number changes, the airflow angle of attack from wing root to tip also decreases and produces different lift coefficients. Therefore, the reason for the wing twist is to make the airfoil section at all of the stations along the span of the wing operate at approximately the same lift coefficient.

While the invention has been disclosed with reference to a certain passenger configuration, it is to be understood that it is readily adaptable to a military fighter, an interceptor, or reconnaissance aircraft and is capable of doing the job of many specialized aircraft configurations.

## Claims

1. A supersonic arrow-shaped main wing airplane, comprising: a fuselage having a forebody section located generally forward of said main wing, a center-body section structurally integrated with said main wing, and an aft-body section extending aft of the trailing edge of said main wing; said forebody section having sidewalls sloping vertically inward in an upward direction such that an upward projection therefrom forms an intersection and said intersection, in a longitudinal direction, forms a continuous curved loft line; said center-body section having its bottom substantially adjacent to the main wing undersurface such that no fuselage protrusion below the main wing undersurface is evident; twin engine nacelles mounted to the undersurface of said main wing, on either side of the fuselage, with air inlets positioned chordwise aft of the main wing leading edge; twin vertical stabilizers extending both vertically below and vertically above the chored plane of said main wing; and an auxiliary wing mounted outboard of said vertical stabilizers, characterized in that said auxiliary wing is rotatably movable as a unit about a lateral axis fixed to said main wing, for roll control and/or pitch control of the airplane.

2. The supersonic airplane as recited in claim 1, further including: windows located within the area of said vertically inward sloping sidewalls of said forebody section and being of a flat surface for minimum visual distortion due to thermal expansion in supersonic flight.

3. The supersonic airplane as recited in claim 1 or 2, wherein: said airplane being area-rule designed and having a plotted area-rule curvilinear line with an average steeper slope in a direction aft of a maximum cross-sectional area point, than in a direction forward of said point; whereby a decrease in skin friction drag and an increase in supersonic wave drag is produced.

4. The supersonic airplane as recited in claim 1, 2, or 3, wherein: said engine nacelles have a forward section externally contoured to a cylindrically divergent section in a fore-to-aft direction and a rearward section externally contoured to a cylindrically convergent section in a fore-to-aft direction.

5. The supersonic airplane as recited in claim 1, 2, 3 or 4, wherein: said wing has a major length of its leading edge, from said fuselage outboard to said vertical stabilizers, at approximately seventy-five degrees angle of sweepback.

**Patentansprüche**

1. Überschallflugzeug mit pfeilförmigem Hauptflügel, umfassend: einen Rumpf, der einen Vorkörperabschnitt hat, welcher sich generell vorwärts von dem Hauptflügel befindet, einen Mittelkörperabschnitt, der strukturell mit dem Hauptflügel integriert ist, und einen Hinterkörperabschnitt, der sich hinter der Abströmkante des Hauptflügels erstreckt; wobei der Vorkörperabschnitt Seitenwände hat, die sich vertikal nach einwärts in einer Aufwärtsrichtung derart neigen, daß eine Aufwärtsprojektion hiervon eine Schnittlinie bildet und diese Schnittlinie in einer Längsrichtung eine kontinuierliche gekrümmte Dachbodenlinie bildet; wobei der Boden des Mittelkörperabschnitts im wesentlichen benachbart der Hauptflügelunter-Oberfläche derart ist, daß kein Rumpfvorsprung unter die Hauptflügelunter-Oberfläche offenkundig ist; Zwillingstriebwerksgondeln, die an der Unter-Oberfläche des Hauptflügels angebracht sind, und zwar auf jeder Seite des Rumpfs, wobei Lufteinlässe sehnenweise hinter der Hauptflügelanströmkante positioniert sind; Zwillingsvertikalstabilisatoren, die sich beide vertikal unter und vertikal über die Sehnenebene des Hauptflügels erstrecken; und einen Hilfsflügel, der außenbords von den Vertikalstabilisatoren angebracht ist, dadurch gekennzeichnet, daß der Hilfsflügel drehbar als eine Einheit um eine seitliche Achse bewegbar ist, die an dem Hauptflügel befestigt ist, und zwar für eine Rollsteuerung und/oder Nicksteuerung des Flugzeugs.

2. Überschallflugzeug nach Anspruch 1, weiter umfassend: Fenster, die sich innerhalb des Bereichs der sich vertikal einwärts neigenden Seitenwände des Vorkörperabschnitts befinden und von einer flachen Oberfläche für minimale visuelle Verzerrung aufgrund von Wärmeausdehnung im Überschallflug sind.

3. Überschallflugzeug nach Anspruch 1 oder 2, worin das Flugzeug flächenregelgestaltet ist und eine entworfene flächenregelkrummlinige Linie mit einer durchschnittlich steileren Neigung in einer Richtung rückwärts von einem maximalen Querschnittsflächenpunkt hat, als in einer Richtung vorwärts von diesem Punkt; wodurch eine Abnahme im Hautreibungsströmungswiderstand und eine Zunahme im Überschallwellenströmungswiderstand erzeugt wird.

4. Überschallflugzeug nach Anspruch 1, 2 oder 3, worin die Triebwerksgondeln einen vorderen Abschnitt haben, der extern zu einem zylindrisch divergenten Abschnitt in einer Vorwärts-nachrückwärts-Richtung konturiert ist, und einen rückwärtigen Abschnitt, der extern zu einem zylindrisch konvergenten Abschnitt in einer Vorwärts-nachrückwärts-Richtung konturiert ist.

5. Überschallflugzeug nach Anspruch 1, 2, 3 oder 4, worin der erwähnte Flügel eine Hauptlänge seiner Anströmkante von dem Rumpf außenbords zu den vertikalen Stabilisatoren bei einem Rückpfeilwinkel von ungefähr 75° hat.

**Revendications**

1. Avion supersonique à aile principale en flèche, comprenant: un fuselage ayant un tronçon avant disposé de façon générale en avant de l'aile principale, un tronçon central intégré par sa structure à l'aile principale, et un tronçon arrière disposé en arrière du bord de fuite de l'aile principale, le tronçon avant ayant des parois latérales inclinées verticalement vers l'intérieur vers le haut afin qu'une projection vers le haut forme une intersection et que cette intersection, en direction longitudinale, forme une courbe continue, et le tronçon central a sa partie inférieure qui est pratiquement adjacente à la surface inférieure de l'aile principale qui est telle qu'aucune saillie n'apparaisse au-dessous de la face inférieure de l'aile principale, deux nacelles à réacteur montées à la face inférieure de l'aile principale de part et d'autre du fuselage, avec des entrées d'air placées, dans la direction de la corde, en arrière du bord d'attaque de l'aile principale, deux stabilisateurs verticaux disposés à la fois verticalement au-dessous et verticalement au-dessus du plan de la corde de l'aile principale, et une aile auxiliaire montée à l'extérieur des stabilisateurs verticaux, caractérisé en ce que l'aile auxiliaire est mobile en rotation comme un tout autour d'un axe latéral fixe par rapport à l'aile principale afin qu'elle permette un réglage du roulis et/ou un réglage du tangage de l'avion.

2. Avion supersonique selon la revendication 1, comprenant en outre des hublots placés dans la région des parois latérales inclinées verticalement vers l'intérieur du tronçon de corps et ayant une surface plate assurant une distorsion visuelle minimale à la suite d'une dilatation thermique en vol supersonique.

3. Avion supersonique selon la revendication 1 ou 2, dans lequel l'avion est réalisé suivant la règle des variations de section et a une courbe tracée en fonction de cette règle qui présente une pente moyenne un peu plus grande en arrière du point de section maximale qu'en avant de ce point, si bien que la traînée de frottement sur le revêtement est réduite et la traînée de l'onde supersonique est accrue.

4. Avion supersonique selon la revendication 1, 2 ou 3, dans lequel les nacelles des réacteurs ont un tronçon de section circulaire divergeant de l'avant vers l'arrière et d'un tronçon arrière profilé extérieurement sous forme d'un tronçon de section circulaire convergeant de l'avant vers l'arrière.

5. Avion supersonique selon la revendication 1, 2, 3 ou 4, dans lequel l'aile a une longueur maximale de bord d'attaque, du fuselage vers l'extérieur jusqu'aux stabilisateurs verticaux, qui fait un angle d'environ 75° avec un axe perpendiculaire à l'axe du fuselage.

EP 0 221 204 B1

Fig. 1

Fig. 2

Fig. 3

Fig. 4

Fig.5

18 17 17 10 12 N 19 O

A B C D E F G H I J K L M P Q R S

28

27 11 13

Fig.7

R2 R1 R1

15

R3 EE R3

15

A-A B-B C-C D-D E-E F-F G-G H-H I-I J-J K-K L-L M-M N-N O-O P-P Q-Q R-R S-S

Fig. 6

EP 0 221 204 B1

Fig.8

Fig.9

Fig.10

CROSS-SECTIONAL AREA Ft²

BODY STATIONS- INCHES →

EP 0 221 204 B1

*Fig.11*

t/c %

SEMISPAN – INCHES

*Fig.12*

+3°
+2°
+1°
0°
−1°
−2°
−3°
−4°

% SEMISPAN

WING TWIST ABOUT 50% C'